Europäisches Patentamt

European Patent Office

Office européen des brevets

(19)

(11) Numéro de publication : **0 580 475 A1**

(12) # DEMANDE DE BREVET EUROPEEN

(21) Numéro de dépôt : 93401808.6

(22) Date de dépôt : 12.07.93

(51) Int. Cl.⁵ : **G01F 1/38,** G01F 1/36, G01L 13/02

(30) Priorité : 24.07.92 FR 9209140

(43) Date de publication de la demande :
26.01.94 Bulletin 94/04

(84) Etats contractants désignés :
BE DE ES GB IT NL SE

(71) Demandeur : SAMES S.A.
Z.I.R.S.T., 13 Chemin de Malacher
F-38240 Meylan (FR)

(72) Inventeur : **Cappeau, Michel**
5B Le Fond du Clos, Chemin des Marronnières
F-38360 Sassenage (FR)
Inventeur : **Chemouny, Dov**
20 rue André Rivoire
F-38100 Grenoble (FR)

(74) Mandataire : **CABINET BONNET-THIRION**
95 Boulevard Beaumarchais
F-75003 Paris (FR)

(54) **Dispositif de mesure de débit d'un liquide.**

(57)     Système de mesure de débit à perte de charge dans un conduit.

Selon l'invention, deux transmetteurs de pression (24) sont connectés aux extrémités d'un tronçon de conduit (22) et comportent chacun une chambre à membrane reliée, par un conduit (38) rempli de liquide isolant, à un transducteur (42) correspondant.

FIG.1

EP 0 580 475 A1

L'invention se rapporte à un dispositif de mesure de débit d'un liquide, notamment un liquide conducteur porté à une haute tension et concerne plus particulièrement dans ce cas un perfectionnement permettant de protéger les moyens de mesure, notamment les transducteurs et les circuits électroniques, de la haute tension.

Il est parfois nécessaire de mesurer le débit d'un liquide conducteur porté à une haute tension. C'est notamment le cas dans une installation de projection électrostatique de produit de revêtement conducteur tel qu'une peinture à l'eau. Dans ce cas, les éléments du circuit d'alimentation en produit de revêtement du projecteur électrostatique porté à la haute tension, notamment d'éventuels moyens de mesure du débit, sont eux-mêmes portés à la haute tension par le liquide conducteur. Il est alors nécessaire de protéger les parties vulnérables des moyens de mesure du débit, notamment les transducteurs.

A titre d'exemple, pour la mesure du débit, on utilise souvent un transmetteur volumétrique structurellement analogue à une pompe à engrenage. Un tel dispositif peut être réalisé en matériau isolant et, dans ce cas, il est possible de coupler un transducteur à l'arbre de sortie du transmetteur, sans danger pour ledit transducteur. Un tel système est cependant peu précis car il est difficile de connaître la fuite interne d'un tel transmetteur. Celle-ci augmente avec le temps en raison de l'usure des organes tournants. Cette usure est variable car certains produits de revêtement sont plus abrasifs que d'autres. De fréquents réétalonnages sont donc nécessaires. Il faut aussi changer régulièrement ledit transmetteur.

L'invention permet de résoudre ces problèmes.

Dans cet esprit, l'invention concerne donc un dispositif de mesure de débit d'un liquide, caractérisé en ce qu'il comporte un ensemble connecté pour être traversé par ledit liquide et comprenant un tronçon de conduit de longueur et section choisies ainsi que deux transmetteurs de pression respectivement connectés aux extrémités dudit tronçon de conduit, chaque transmetteur de pression comprenant un passage pour ledit liquide délimité en partie par une paroi mobile et une chambre définie de l'autre côté de ladite paroi mobile et en ce que les deux chambres desdits transmetteurs sont reliées par des conduits respectifs, remplis d'un liquide tampon, à des moyens de mesure différentielle de pression.

Le dispositif décrit ci-dessus est plus particulièrement destiné à la mesure du débit d'un liquide conducteur porté à une haute tension, par exemple destiné à être inséré dans une installation de projection électrostatique d'un produit de revêtement conducteur, comme on le verra en détail plus loin. Dans ce cas, lesdits conduits respectifs et le liquide qu'ils contiennent sont électriquement isolants et ces conduits ont une longueur déterminée pour isoler efficacement lesdits moyens de mesure de la haute tension. Cependant, le même dispositif est intéressant pour d'autres liquides, par exemple un liquide, conducteur ou non, chimiquement agressif et/ou chargé de particules solides. Le dispositif est aussi avantageux lorsque plusieurs liquides différents (typiquement des produits de revêtement de couleurs différentes) doivent être utilisés successivement avec nécessité de nettoyer très rapidement le circuit.

Les moyens de mesure différentielle précités peuvent être avantageusement constitués par deux transducteurs de pression comprenant chacun un accès d'entrée de liquide et une sortie de signal électrique. Les deux sorties de signal électrique peuvent être alors connectées à un circuit d'entrée de moyens électroniques de mesure comme par exemple un amplificateur différentiel.

L'invention sera mieux comprise et d'autres avantages de celle-ci apparaîtront plus clairement à la lumière de la description qui va suivre d'un dispositif de mesure de débit d'un liquide conducteur conforme à son principe, donnée uniquement à titre d'exemple et faite en référence aux dessins annexés dans lesquels:

- la figure 1 est un schéma de principe d'un dispositif de mesure de débit conforme à l'invention; et
- la figure 2 est une vue de détail en coupe d'un transmetteur utilisable dans le cadre de l'invention.

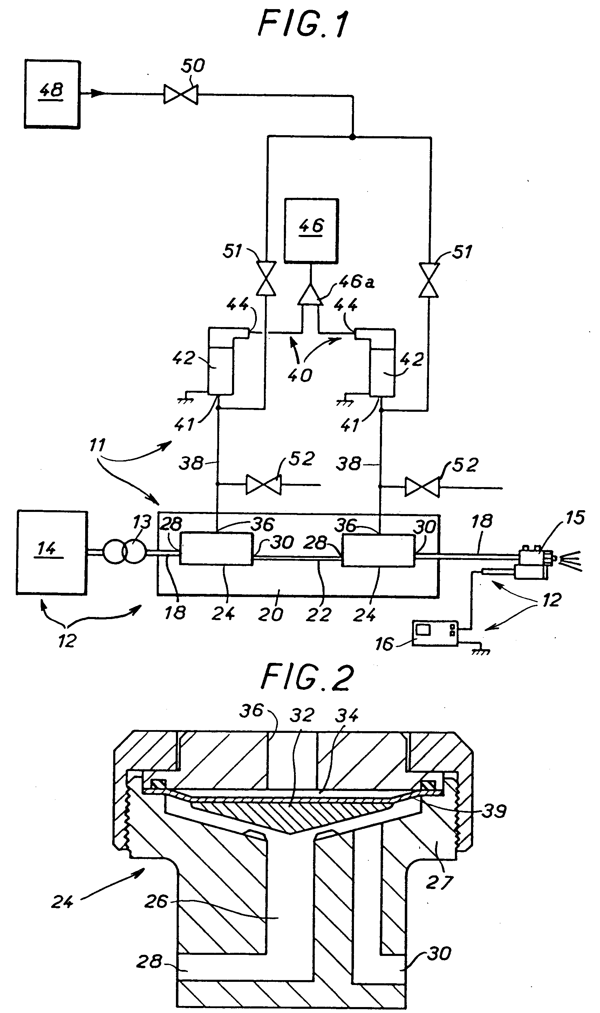

En considérant plus particulièrement la figure 1, on a représenté un dispositif de mesure de débit 11 inséré dans une installation de projection électrostatique 12 d'un produit de revêtement conducteur. Cette installation comprend ici un réservoir isolé 14 d'un tel produit de revêtement, un pulvérisateur électrostatique 15 électriquement connecté à un générateur haute tension 16 et un circuit de distribution 18 établi entre le réservoir 14 et le pulvérisateur 15. Une pompe 13 est insérée dans ce circuit pour y faire circuler le produit de revêtement.

Le dispositif de mesure de débit 11 comporte un ensemble 20 connecté pour être traversé par le produit de revêtement liquide conducteur et donc inséré dans le circuit de distribution 18. Cet ensemble comprend un tronçon de conduit 22 de longueur et section choisies et deux transmetteurs de pression 24 respectivement connectés aux extrémités dudit tronçon de conduit 22.

Chaque transmetteur de pression 24 est tel que représenté à la figure 2. Il comprend un passage 26 pour le produit de revêtement liquide, défini dans un boîtier 27 et s'étendant entre deux accès de raccordement 28, 30. Ce passage est délimité en partie par une paroi mobile 32. Une chambre 34 est définie dans le boîtier 27 de l'autre côté de la paroi mobile 32 par rapport au passage 26. Cette chambre est reliée, par un accès de raccordement 36, à un conduit 38 correspondant, en matériau électriquement isolant. La chambre 34 et le conduit 38 correspondant sont remplis d'un liquide électriquement isolant.

Dans l'exemple représenté, la paroi mobile 32 de chaque transmetteur 24 comporte une membrane 39 imperméable et déformable. En fait, ledit transmetteur tel que représenté est dérivé d'un clapet à membrane, de structure connue, généralement dénommé "régulateur de pression" dans la technique. On a simplement modifié un tel clapet (en enlevant l'obturateur mobile lié à la paroi 32 et un ressort) pour l'adapter à sa nouvelle fonction.

Les deux conduits 38 sont connectés à des moyens de mesure différentielle de pression 40, plus particulièrement aux accès d'entrée de liquide 41 de deux transducteurs de pression 42. Un tel transducteur est connu en soi et comporte une sortie de signal électrique 44. Les deux sorties 44 de ces deux transducteurs sont connectées à des moyens électroniques de mesure 46 à entrée différentielle, plus particulièrement ici aux entrées d'un amplificateur différentiel 46a constituant le circuit d'entrée desdits moyens électroniques de mesure. Comme représenté, les deux transducteurs 42 peuvent être connectés au potentiel de la terre.

Par ailleurs, les conduits en matériau isolant 38 sont connectés à une source de liquide isolant sous pression 48, par l'intermédiaire d'une vanne d'isolement 50 et de deux vannes d'équilibrage 51, respectivement connectées entre la vanne 50 et chacun des conduits 38. Chacun des conduits 38 est également connecté à une vanne de purge 52. Toutes ces vannes sont en matière plastique électriquement isolante et permettent de remplir les conduits 38 sous une certaine pression. Le fonctionnement est le suivant.

Avant la mise en service, il est nécessaire de remplir les conduits 38 de liquide isolant. Pour ce faire, toutes les vannes 50, 51 et 52 sont ouvertes. Le liquide isolant, fourni sous pression par la source 48, remplit les conduits 38. Lorsque ceux-ci sont convenablement purgés en air et uniquement remplis de liquide isolant, les vannes 52 sont fermées, puis on arrête l'alimentation de liquide isolant en fermant la vanne 50. L'équilibrage des pressions dans les deux conduits 38 s'opère ensuite, les vannes 51 restant ouvertes après la fermeture de la vanne 50. La fermeture des vannes 51 isole complètement les conduits 38 connectés entre les transmetteurs 24 et les transducteurs 42. On peut prévoir un raccord (non représenté) en amont des vannes 51 pour permettre de déconnecter la source 48 après remplissage des conduits 38. Le produit de revêtement est mis en circulation dans le circuit de distribution 18 par la pompe 13 et la perte de charge dans le tronçon de conduit 22 est détectée par les transmetteurs à membrane 24 et convertie par les transducteurs 42 en signaux électriques appliqués à l'entrée différentielle de l'amplificateur 46a. Le circuit de mesure 46 traduit cette information en une mesure de débit.

D'autres perfectionnements sont possibles. Ainsi, pour minimiser les erreurs de mesure dues aux variations de température, on pourra avantageusement placer les deux conduits 38 dans une même gaîne de préférence en matériau thermiquement isolant. Ces conduits seront identiques, notamment de mêmes longueur et section.

Enfin, il est à noter que le même dispositif peut être utilisé en tant que viscosimètre.

En effet, la perte de charge $\Delta P$ dans la cellule de mesure peut être écrite sous la forme:

$$\Delta P = C.V.D$$

où C est une constante dépendant de la géométrie et du dimensionnement de l'ensemble 20,
V est la viscosité dynamique du liquide en écoulement,
D est le débit de liquide.

Si on utilise un liquide étalon dont la viscosité $V_1$ est connue, on peut écrire:

$$\Delta P_1 = C.V_1.D$$

Avec un second liquide dont la viscosité $V_2$ est inconnue, et à déterminer, on peut ajuster le débit à la valeur D en jouant sur la pression délivrée par l'alimentation en liquide, et/ou sur la perte de charge en aval du dispositif. Dans ce cas, on a:

$$\Delta P_2 = C.V_2.D$$

Par conséquent:

$$\frac{V_2}{V_1} = \frac{\Delta P_2}{\Delta P_1} \text{ d'où } V_2 = \frac{\Delta P_2}{\Delta P_1}.V_1$$

On peut donc mesurer la viscosité $V_2$ par une simple mesure de pressions différentielles. De préférence, le liquide étalon sera un liquide Newtonien de façon à minimiser les erreurs de mesure dues à la variation de $V_1$ en fonction du débit.

Le dispositif est particulièrement intéressant lorsque le second liquide est non-Newtonien. Dans ce cas, $V_2$ dépend de la vitesse moyenne de l'écoulement U, donc du débit D:

$$V_2(U) = V_2(D) = \frac{\Delta P_2(D)}{\Delta P_1}.V_1$$

avec

$$D = U \times S = U.\pi\frac{d^2}{4}$$

S et d étant la section et le diamètre du tronçon de conduit 22.

Le viscosimètre permet alors de mesurer la viscosité du second liquide dans des conditions d'écoulement réelles (écoulement dans un tuyau de diamètre d à une vitesse moyenne U).

En faisant varier le débit D, on pourra obtenir la variation de la viscosité $V_2$ en fonction du gradient de cisaillement de l'écoulement.

## Revendications

**1-** Dispositif de mesure de débit d'un liquide, caractérisé en ce qu'il comporte un ensemble (20) connecté pour être traversé par ledit liquide et comprenant un tronçon de conduit (22) de longueur et section choisies ainsi que deux transmetteurs de pression (24) respectivement connectés aux extrémités dudit tronçon de conduit, chaque transmetteur de pression comprenant un passage pour ledit liquide délimité en partie par une paroi mobile (32) et une chambre (34) définie de l'autre côté de ladite paroi mobile et en ce que les deux chambres desdits transmetteurs sont reliées par des conduits (38) respectifs, remplis d'un liquide tampon, à des moyens de mesure différentielle de pression (40).

2- Dispositif selon la revendication 1, pour un liquide conducteur porté à une haute tension, caractérisé en ce que lesdits conduits (38) et ledit liquide tampon sont électriquement isolants, les conduits ayant une longueur déterminée pour permettre d'isoler efficacement lesdits moyens de mesure de la haute tension.

3- Dispositif selon la revendication 1 ou 2, caractérisé en ce que lesdits moyens de mesure différentielle sont constitués par deux transducteurs de pression (42) comprenant chacun un accès d'entrée de liquide (41) et une sortie de signal électrique (44) et par des moyens électroniques de mesure à entrée différentielle (46) reliés aux sorties de signal électrique desdits transducteurs.

4- Dispositif selon la revendication 2 ou 3, caractérisé en ce que lesdits conduits en matériau électriquement isolant (38) sont adaptés à être connectés à une source de liquide électriquement isolant (48).

5- Dispositif selon la revendication 4, caractérisé en ce que ladite source de liquide électriquement isolant (48) est connectée aux deux conduits en matériau électriquement isolant (38) par des vannes (51) respectives.

6- Dispositif selon l'une des revendications précédentes, caractérisé en ce que la paroi mobile de chaque transmetteur comporte une membrane (39).

7- Dispositif selon la revendication 6, caractérisé en ce que chaque transmetteur de pression a la structure d'un clapet à membrane, par exemple du genre connu dénommé "régulateur de pression".

8- Dispositif selon l'une des revendications précédentes, caractérisé en ce que les deux conduits (38) reliant lesdites chambres auxdits transmetteurs sont identiques.

9- Dispositif selon la revendication 7, caractérisé en ce que lesdits conduits (38) sont placés dans une même gaîne, de préférence en matériau thermiquement isolant.

# FIG.1

# FIG.2

Office européen
des brevets

**RAPPORT DE RECHERCHE EUROPEENNE**

Numéro de la demande

EP    93 40 1808

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 649 790 (B. VALLAT)<br>* abrégé; figure 1 *<br>--- | 1,6 | G01F1/38<br>G01F1/36<br>G01L13/02 |
| Y | EP-A-0 334 611 (HONEYWELL INC.)<br>* abrégé *<br>* colonne 2, ligne 54 - colonne 5, ligne 44; figures 1,2 *<br>--- | 1,6 | |
| A | US-A-4 986 127 (S. SHIMADA ET AL)<br>* abrégé; figure 5A *<br>--- | 1 | |
| A | WO-A-8 807 185 (ROSEMOUNT INC.)<br>* abrégé; figure 1 *<br><br>----- | 1 | |

**DOMAINES TECHNIQUES RECHERCHES (Int. Cl.5)**

G01F
G01L

Le présent rapport a été établi pour toutes les revendications

| Lieu de la recherche | Date d'achèvement de la recherche | Examinateur |
|---|---|---|
| BERLIN | 25 OCTOBRE 1993 | VORROPOULOS G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)

6